# EUROPÄISCHE PATENTSCHRIFT

(11) **EP 1 532 638 B1**
(45) Veröffentlichungstag und Bekanntmachung des Hinweises auf die Patenterteilung: **26.03.2008**
(21) Anmeldenummer: 03747911.0
(22) Anmeldetag: 19.08.2003
(51) Int. Cl.: G21F 9/00

(54) **VERFAHREN ZUR REINIGUNG DES DAMPFERZEUGERS EINES DRUCKWASSERREAKTORS**
METHOD FOR CLEANING A STEAM GENERATING DEVICE OF A COMPRESSED WATER REACTOR
PROCEDE DE NETTOYAGE DU DISPOSITIF PRODUCTEUR DE VAPEUR D'UN REACTEUR A EAU SOUS PRESSION

(30) Priorität: 23.08.2002 DE 10238730
(43) Veröffentlichungstag der Anmeldung: 25.05.2005
(73) Patentinhaber: AREVA NP GmbH, 91052 Erlangen (DE)
(72) Erfinder: BITTER, Konrad, 91074 Herzogenaurach (DE); HOLLWEDEL, Ursula, 91220 Schnaittach (DE); SCHUSS, Silvia, 94351 Feldkirchen (DE)
(74) Vertreter: Mörtel & Höfner
(86) Internationale Anmeldenummer: PCT/EP2003/009171
(87) Internationale Veröffentlichungsnummer: WO 2004/019343

(56) Entgegenhaltungen:
- DE-A- 19 857 342
- FR-A- 2 764 364
- US-A- 4 632 705
- US-A- 5 164 015
- US-A- 5 814 204
- US-A- 6 017 399
- BOSHOLM J: "ENTFERNUNG EISENOXIDHALTIGER BELAEGE AUS DAMPFERZEUGERN VON DRUCKWASSERREAKTOREN" KERNTECHNIK, CARL HANSER VERLAG. MUNCHEN, DE, Bd. 58, Nr. 1, 1. Februar 1993 (1993-02-01), Seiten 37-39, XP000381017 ISSN: 0932-3902

## Beschreibung

Die Erfindung betrifft ein Verfahren zur Reinigung der Dampferzeuger eines Druckwasserreaktors gemäß dem Oberbegriff des Anspruchs 1. Ein solches Verfahren ist aus der US-A-5 164 015 bekannt. Ein Dampferzeuger eines Druckwasserreaktors umfasst üblicherweise einen Behälter, in dessen unterem Bereich eine Vielzahl von z.B. u-förmig gebogenen, von Primärkühlmittel durchströmten Wärmetauscherrohren angeordnet sind. Im oberen Behälterbereich befinden sich weitere Einbauten wie Dampfabscheider und Dampftrockner. Während die Wärmetauscherrohre aus korrosionsfesten Legierungen bestehen, sind der Behälter, zur Fixierung der Wärmetauscherrohre dienende Hilfsstrukturen und von Sekundärkühlmittel durchströmte Teile des Sekundärkreislaufs zum Teil aus Materialien mit geringerer Korrosionsbeständigkeit, beispielsweise aus C-Stahl hergestellt. Die genannten Teile unterliegen daher bei den vorherrschenden Betriebstemperaturen einer Korrosion. Während des Betriebes im Sekundärkreislauf entstehende Korrosionsprodukte, hauptsächlich Magnetit, gelangen in den Dampferzeuger, wo sie sich auf dem Behälterboden und in Rohrzwischenräumen ablagern sowie als Belag auf der Oberfläche der Wärmetauscherröhren aufwachsen. Um die Integrität und Funktionsfähigkeit von Dampferzeugern, insbesondere einen ungehinderten Wärmeübergang zu gewährleisten, werden - falls nötig - im Zuge der jährlichen Revisionen Reinigungsarbeiten durchgeführt, um den von den Ablagerungen gebildeten Schlamm und den Belag der Wärmetauscherrohre chemisch zu entfernen.

Zu diesem Zweck wird der Dampferzeuger schrittweise soweit mit Reinigungsflüssigkeit gefüllt, dass die Austauscherrohre völlig untergetaucht sind. Eine übliche, beispielsweise aus US 4,632,705 bekannte Reinigungslösung enthält eine komplexbildende Säure wie Ethylendiamintetraessigsäure (EDTA), ein Reduktionsmittel, beispielsweise Hydrazin, und Ammoniak als Alkalisierungsmittel. Alkalische Bedingungen sind erforderlich, um einen Materialabtrag bei den aus C-Stahl oder niedrig legierten Stählen bestehenden Teilen des Sekundärkreises möglichst gering zu halten. Außerdem wird zu diesem Zweck ein Korrosionsinhibitor zugesetzt. Bei einem aus der DE-Offenlegungsschrift 198 57 342 bekannten, ebenfalls mit Hydrazin als Reduktionsmittel arbeitenden Verfahren wird als Alkalisierungsmittel Morpholin (Tetrahydro-1,4-oxazin) verwendet. Morpholin ist wesentlich weniger flüchtig als Ammoniak, so dass nur ein entsprechend geringerer Anteil in die Dampfphase übertritt. Bei Reinigungsverfahren der vorliegenden Art wird in der Regel so vorgegangen, dass in bestimmen Zeitabständen durch hinter dem Dampferzeuger angeordnete Ventile des Frischdampfsystems eine plötzliche Druckentlastung vorgenommen wird, die zu einem starken Aufsieden und zu heftigen Turbulenzen in der Reinigungsflüssigkeit führt. Auf diese Weise wird die Reinigungslösung durchmischt, so dass der Komplexbildner den Magnetit nach Reduktion auflösen kann. Da der Anteil von Morpholin in der Dampfphase wesentlich geringer ist als der von Ammoniak, gelangt bei der Druckentlastung wesentlich weniger umweltbelastendes Alkalisierungsmittel in die Umgebung als bei mit Ammoniak arbeitenden Verfahren. Für das Reinigungsverfahren hat der geringe Verlust an Alkalisierungsmittel den wesentlichen Vorteil, dass der pH-Wert bis zum Ende der Reinigung nahezu konstant bleibt. Dadurch ist der Grundmetallabtrag gegenüber Ammoniak verwendenden Verfahren, bei denen wegen des Ammoniakaustrags der pH-Wert gegen Ende der Reinigungsdauer bis auf Werte nahe dem Neutralpunkt absinkt, verringert.

Aufgabe der Erfindung ist es, ein Reinigungsverfahren für die Dampferzeuger eines Druckwasserreaktors anzugeben, mit dem eine wirkungsvolle Reinigung bei noch weiter verringerten Grundmetallabtrag ohne Zusatz eines Korrosionsinhibitors möglich ist.

Diese Aufgabe wird nach Anspruch 1 gelöst. Es hat sich überraschenderweise gezeigt, dass sich durch Verwendung einer Reinigungslösung, in der die molare Morpholin-Konzentration mindestens so groß ist wie die molare Konzentration von EDTA, eine gegenüber Ammoniak-Verfahren schonendere, nämlich das Grundmetall weniger angreifende Reinigung möglich ist.

Die absoluten Konzentrationen der genannten Bestandteile in der Reinigungslösung hängen naturgemäß von der Menge der jeweils zu entfernenden Ablagerung ab, so dass diese geg.falls in relativ hohen Konzentrationen vorliegen. Trotzdem ist der genannte Schoneffekt beobachtbar, wenn Morpholin mit im Vergleich zu EDTA gleicher oder überschüssiger Mol-Konzentration vorhanden ist.

Das Molverhältnis von Morpholin zu EDTA liegt vorzugsweise zwischen 1:1 und 6:1. Optimale Ergebnisse werden erzielt, wenn es 4:1 beträgt. Das letztgenannte Molverhältnis entspricht einem Massenverhältnis von 1,2. Gemäß der Erfindung weist das Molverhältnis von Hydrazin zu EDTA Werte auf, die zwischen 1:6 und 1:1 liegen. Bevorzugt ist ein Molverhältnis von 1:3, was einem Massenverhältnis von 0,04 entspricht. Neben dem besonders bevorzugten Hydrazin kann auch als Reduktionsmittel Formaldehyd eingesetzt werden.

### Ausführungsbeispiel:

Eine für die Reinigung eines Dampferzeugers geeignete Reinigungslösung enthält 60g/l EDTA (= 0,205 Mol/l), 71,5g/l Morpholin (= 0,821 Mol/l) und 2,2g/l Hydrazin (=0,068 Mol/l). Eine derartige Lösung weist einen pH-Wert von etwa 9 auf. Das Molverhältnis von Morpholin zu EDTA ist also 4:1, das von Hydrazin zu EDTA ist 1:3.

Eine bevorzugte Verfahrensvariante sieht vor, dass die Reinigung während des Herunterfahrens des Reaktors durchgeführt wird. Sobald im Dampferzeuger eine Temperatur von etwa 160° vorliegt, werden die Bestandteile der Lösung in konzentrierter Form in einer derartigen Menge zudosiert, dass sich nach Zugabe von Wasser die oben angegebenen Konzentrationen einstellen. Im Dampferzeuger herrscht abhängig von der Reinigungstemperatur ein Druck von etwa 6 bis 10 bar. Durch über die gesamte Reinigungsdauer verteilte, plötzliche Druckentlastungen wird die Reinigungslösung zum Aufsieden gebracht, wodurch unverbrauchte Chemikalien mit den Ablagerungen in Kontakt kommen. Unterhalb von etwa 140°C ist die Reinigung nicht mehr effektiv durchführbar.

Um die Wirksamkeit von mit Morpholin arbeitenden Reinigungslösungen im Vergleich zu Ammoniak beim Einsatz des selben Verfahrens zu untersuchen, wurden die im folgenden näher beschriebenen Tests durchgeführt:

In einem Laborautoklaven aus Edelstahl wurden 11,5 g eines aus dem Dampferzeuger einer Druckwasser-Anlage stammenden Magnetitschlamms mit einem Eisengehalt von 72,5 Gew.% mit ca. 1 1 der oben angegebenen Reinigungslösung 8 Stunden lang bei einer Temperatur von 160° behandelt, wobei mehrmals plötzliche Druckentlastungen vorgenommen wurden, um eine innige Durchmischung zu erzielen. Die im Zuge des Abdampfens entfernte Wassermenge und die zur Probennahme aus dem Autoklaven entfernte Menge an Reinigungslösung wurde wieder eingespeist. Mit einer im Autoklaven angeordneten, mit Teflon beschichteten Aufhängevorrichtung waren Coupons aus C-Stahl unterhalb des Flüssigkeitsspiegels positioniert.

Mit diesen Rahmenbedingungen wurden 2 Versuche durchgeführt, wobei in einem Fall mit Ammonium/EDTA und dem anderen Fall mit Morpholin/EDTA gearbeitet wurde und das jeweilige Alkalisierungsmittel so dosiert wurde, dass sich ein pH-Wert von 9 einstellt. Durch das Wiedereinspeisen entnommener Reinigungsflüssigkeit blieb dieser Wert bis zum Schluss der Reinigung nahezu konstant, so dass der oben beschriebene Effekt eines erhöhten Grundmetallangriffs aufgrund einer pH-Wert-Absenkung unterdückt wurde. Am Ende der Versuche wurde der aus den Coupons und der aus dem Schlamm gelöste Eisenanteil bestimmt. In beiden Fällen wurde ein Verhältnis von gelöstem Schlamm zu eingesetztem Schlamm von 95% ermittelt. Hinsichtlich der Auflösung von Magnetitschlamm zeigten also beide Reinigungslösungen eine vergleichbare Wirkung. Während jedoch bei dem Versuch mit Ammoniak der aus den C-Stahl Coupons gelöste Eisenanteil 20% betrug, war dieser Anteil beim Morpholin-Versuch nur 15%. Bei der Reinigungslösung mit Morpholin war somit die korrosive Beeinflussung des C-Stahles geringer. Bei der Reinigung mit Ammoniak stellte sich ein durchschnittlicher Materialabtrag von 27µm ein, was einer durchschnittlichen Abtragsrate von 34 g/l*h*m² entspricht. Beim Morpholin-Versuch wurde ein durchschnittlicher Materialabtrag von 21µm beziehungsweise eine durchschnittliche Abtragungsrate von 20 g/l*h*m² beobachtet. Da in beiden Fällen der pH-Wert nahezu konstant gehalten wurde, kann das schlechtere Abschneiden des Ammoniak-Versuches nicht auf eine pH-Wert-Absenkung zurückgeführt werden. Hier scheint vielmehr ein sich aus der Kombination EDTA/Morpholin ergebender Effekt vorzuliegen.

Von der Anmelderin durchgeführte Differenzthermoanalysen von Ammonium/EDTA und Morpholin/EDTA deuten auf eine höhere thermische Stabilität des Systems Morpholin/EDTA hin, sofern die genannten Molverhältnisse eingehalten werden. EDTA zersetzt sich bekanntlich bei höheren Temperaturen, wobei korrosionsfördernde Zersetzungsprodukte, beispielsweise Imino-diessigsäure entstehen. Bisher wurde diesem Problem mit einer verkürzten Reinigungsdauer oder mit einer verringerten Reinigungstemperatur begegnet. Die sich daraus ergebenden Nachteile liegen auf der Hand. Bei dem vorgeschlagenen Verfahren dagegen können größere Zeitrahmen ausgenutzt werden. Darüber hinaus dürfte aufgrund der höheren thermischen Stabilität von Morpholin/EDTA eine Reinigung auch bei höheren Temperaturen als 180°C möglich sein.

## Patentansprüche

1. Verfahren zur Reinigung von Dampferzeugern eines Druckwasserreaktors, bei dem diese sekundärseitig unter erhöhtem Druck und erhöhter Temperatur mit einer wässrigen Reinigungslösung behandelt werden, die EDTA, ein Reduktionsmittel und als Alkalisierungsmittel Morpholin enthält,
**gekennzeichnet durch**
die Verwendung einer Reinigungslösung, in der die molare Morpholin-Konzentration mindestens so groß ist wie die molare Konzentration von EDTA und in der Hydrazin und/oder Formaldehyd als Reduktionsmittel verwendet werden, wobei das Verhältnis von Hydrazin und/oder Formaldehyd zu EDTA 1:6 bis 1:1 beträgt.

2. Verfahren nach Anspruch 1,
**gekennzeichnet durch**
die Verwendung einer Reinigungslösung, in der Morpholin und EDTA in einem Molverhältnis von 1:1 bis 6:1 vorhanden sind.

3. Verfahren nach Anspruch 2,
**gekennzeichnet durch**
ein Molverhältnis von Morpholin zu EDTA von 4:1.

4. Verfahren nach Anspruch 1, 2 oder 3,
**dadurch gekennzeichnet,**
**dass** als Reduktionsmittel Hydrazin verwendet wird.

5. Verfahren nach Anspruch 1, 2 oder 3,
**dadurch gekennzeichnet,**
**dass** als Reduktionsmittel Formaldehyd verwendet wird.

6. Verfahren nach wenigstens einem der Ansprüche 1 bis 5,
**gekennzeichnet durch**
ein Molverhältnis von Hydrazin und/oder Formaldehyd zu EDTA von 1:3.

7. Verfahren nach wenigstens einem der Ansprüche 1 bis 6,
**dadurch gekennzeichnet,**
**dass** während der Reinigung eine Temperatur von 140°C bis 200°C eingehalten wird.

## Claims

1. Method of cleaning steam generators of a pressurized water reactor, in which these are treated on the secondary side under superatmospheric pressure and at elevated temperature with an aqueous cleaning solution comprising EDTA, a reducing agent and morpholine as alkalizing agent, **characterized by** the use of a cleaning solution in which the molar morpholine concentration is at least as great as the molar concentration of EDTA and in which hydrazine and/or formaldehyde are used as reducing agent, with the ratio of hydrazine and/or formaldehyde to EDTA being from 1:6 to 1:1.

2. Method according to Claim 1, **characterized by** the use of a cleaning solution in which morpholine and EDTA are present in a molar ratio of from 1:1 to 6:1.

3. Method according to Claim 2, **characterized by** a molar ratio of morpholine to EDTA of 4:1.

4. Method according to Claim 1, 2 or 3, **characterized in that** hydrazine is used as reducing agent.

5. Method according to Claim 1, 2 or 3, **characterized in that** formaldehyde is used as reducing agent.

6. Method according to at least one of Claims 1 to 5, **characterized by** a molar ratio of hydrazine and/or formaldehyde to EDTA of 1:3.

7. Method according to at least one of Claims 1 to 6, **characterized in that** a temperature of from 140°C to 200°C is maintained during cleaning.

## Revendications

1. Procédé de nettoyage de générateurs de vapeur d'un réacteur à eau pressurisée, consistant à traiter lesdits générateurs du côté du circuit secondaire avec une solution aqueuse de nettoyage contenant de l'EDTA, un agent de réduction ainsi que de la morpholine en tant qu'agent d'alcalinisation, ledit traitement étant effectué sous une pression élevée et à des températures élevées,
**caractérisé en ce que**
l'on utilise une solution de nettoyage dans laquelle la concentration molaire en morpholine est au moins aussi élevée que la concentration molaire en EDTA et dans laquelle de l'hydrazine et/ou du formaldéhyde sont utilisés en tant qu'agent de réduction, le rapport entre d'une part l'hydrazine et/ou le formaldéhyde et d'autre part l'EDTA étant compris entre 1 : 6 et 1 : 1.

2. Procédé selon la revendication 1,
**caractérisé en ce que**
l'on utilise une solution de nettoyage dans laquelle de la morpholine et de l'EDTA sont présents dans un rapport molaire compris entre 1 : 1 et 6 : 1.

3. Procédé selon la revendication 2,
**caractérisé en ce que**
le rapport molaire entre la morpholine et l'EDTA est de 4 : 1.

4. Procédé selon les revendications 1, 2 ou 3,
**caractérisé en ce que**
l'on utilise de l'hydrazine en tant qu'agent de réduction.

5. Procédé selon les revendications 1, 2 ou 3,
**caractérisé en ce que**
l'on utilise du formaldéhyde en tant qu'agent de réduction.

6. Procédé selon au moins une des revendications 1 à 5,
**caractérisé en ce que**
le rapport molaire entre d'une part l'hydrazine et/ou le formaldéhyde et d'autre part l'EDTA est de 1 : 3.

7. Procédé selon au moins une des revendications 1 à 6,
**caractérisé en ce que**,
pendant le nettoyage, la température est comprise entre 140 °C et 200 °C.
